# EUROPÄISCHE PATENTSCHRIFT

(11) **EP 3 333 205 B1**
(45) Veröffentlichungstag und Bekanntmachung des Hinweises auf die Patenterteilung: **29.04.2020**
(21) Anmeldenummer: 17205580.8
(22) Anmeldetag: 05.12.2017
(51) Int. Cl.: C08G 18/08, C08G 18/18, C08G 18/28, C08G 18/54, C08G 18/76, C08G 18/79, C08L 75/08, C08G 101/00

(54) **POLYURETHAN BINDEMITTEL MIT VERBESSERTER FLIESSFÄHIGKEIT**
POLYURETHANE BINDER WITH IMPROVED FLOWABILITY
LIANT DE POLYURÉTHANE AYANT UNE FLUIDITÉ AMÉLIORÉE

(30) Priorität: 06.12.2016 DE 102016123621
(43) Veröffentlichungstag der Anmeldung: 13.06.2018
(73) Patentinhaber: ASK Chemicals GmbH, 40721 Hilden (DE)
(72) Erfinder: Mertscheit, Melanie, 42489 Wülfrath (DE); Priebe, Christian, 42489 Wülfrath (DE); Lenzen, Frank, 40299 Düsseldorf (DE)
(74) Vertreter: Müller Schupfner & Partner Patent- und Rechtsanwaltspartnerschaft mbB

(56) Entgegenhaltungen:
- EP-A2- 1 057 554
- GB-A- 2 033 413
- US-A- 4 119 584
- US-A- 4 345 042
- US-A- 4 448 951
- US-A1- 2012 009 407

## Beschreibung

### Einleitung

Die vorliegende Erfindung betrifft Formstoffmischungen auf Basis von Phenolharzen vom Benzylethertyp und Polyisocyanaten enthaltend weiterhin Silikontenside zum Einsatz in Phenolharz-Polyurethan-Cold Box-Verfahren (PUCB-Verfahren) und/oder Phenolharz-Polyurethan-No Bake-Verfahren (PUNB-Verfahren). Weiterhin betrifft die Erfindung mit den Formstoffmischungen hergestellte Kerne, Formen oder Speiser sowie deren Verwendung im Metallguss.

### Hintergrund der Erfindung und allgemeiner Stand der Technik

Die Herstellung von Kernen und Formen nach dem PUCB- und/oder nach dem PUNB-Verfahren hat in der Gießereiindustrie große Bedeutung erlangt. Zur Bindung eines feuerfesten Formgrundstoffes werden dabei Zwei-Komponenten-Polyurethan-Systeme eingesetzt. Die Polyol-Komponente besteht aus einem Polyol mit mindestens zwei OH-Gruppen pro Molekül, die Isocyanat-Komponente aus einem Polyisocyanat mit mindestens zwei NCO-Gruppen pro Molekül. Als Polyol-komponente werden u.a. Phenol-Formaldehyd-Harze eingesetzt. Die Aushärtung des Gemischs aus Formgrundstoff und Bindemittel, kurz auch Formstoffmischung genannt, erfolgt beim PUCB-Verfahren mit Hilfe von niedrigsiedenden tertiären Aminen, die nach der Formgebung gasförmig oder als Aerosol durch die Formstoffmischung geleitet werden (vergleiche US 3409579). Üblicherweise erfolgt dies mit Hilfe eines Trägergases, z.B. Luft, Stickstoff oder CO₂, in das zumindest ein tertiäres Amin eindosiert wird. Beim PUNB-Verfahren erfolgt eine Zugabe von flüssigen tertiären Aminen und/oder Metallverbindungen als Katalysator zur Formstoffmischung.

Für Bindemittel in Formstoffmischungen zur Herstellung von Formen und Kernen für den Metallguss sind bereits eine Vielzahl unterschiedlicher Additive vorgeschlagen worden, u.a. auch anionische Tenside oder Netzmittel wie Silikone zur Erhöhung der Fließfähigkeit der Formstoffmischung. Der Einsatz von Silikontensiden ist jedoch bisher unbekannt.

Der Einsatz von Silikontensiden ist für PU-Schäume bekannt, um eine gute Zellstruktur bei der Aufschäumung durch ein Treibmittel zu erzielen. Ein Beispiel hierfür ist die US 4568704, die in Beispiel 1 den Zusatz eines Silikontensids zur Herstellung von Isolationsschäumen auf Basis von Phenol-Formaldehyd Urethanen und Amid-Diolen offenbart. Weitere Beispiele für den Einsatz von Silikontensiden in Polyurethanschäumen sind US 4448951, US 4345042, US 2012/0009407 A1, GB 2033413 A und US 4119584. EP 1057554 A2 offenbart Bindemittelsysteme in denen Alkylsilikate als Lösemittel für die Polyol- und/oder Polyisocyanat-Komponente eingesetzt werden.

### Aufgabe der Erfindung

Aufgabe der Erfindung ist es, ein Additiv zur Erhöhung der Fließfähigkeit von Formstoffmischungen zu finden, um Formen, Kerne und Speiser mit höherem Kerngewicht und höherer Festigkeit zu schaffen. Auch sollen die Formen, Kerne und Speiser hinsichtlich ihrer Dichte möglichst homogen sein.

### Zusammenfassung der Erfindung

Die Aufgabe konnte durch den Gegenstand der unabhängigen Patentansprüche gelöst werden. Vorteilhafte Weiterbildungen sind Gegenstand der Unteransprüche oder nachfolgend beschrieben.

Die Erfindung betrifft Formstoffmischungen enthaltend das Bindemittel auf Basis von Phenolharzen vom Benzylethertyp, Silikontenside, feuerfesten Formgrundstoff und Polyisocyanate und ggf. Katalysatoren und aus den Formstoffmischungen nach Härtung hergestellte Kerne, Formen und Speiser. Auch Gegenstand der Erfindung ist die Verwendung der Kerne, Formen und Speiser für den Metallguss, insbesondere den Eisen- sowie Aluminiumguss. Überraschend wurde festgestellt, dass die Silikontenside die Fließfähigkeit der Formgrundstoffe erhöhen und gleichzeitig die unerwünschten Anhaftungen im Kernkasten reduzieren.

### Detaillierte Beschreibung der Erfindung

Zur Herstellung der Phenolharze vom Benzylethertyp sind alle herkömmlich verwendeten Phenol-Verbindungen geeignet. Neben unsubstituierten Phenolen können substituierte Phenole oder Gemische hiervon eingesetzt werden. Die Phenol-Verbindungen sind vorzugsweise entweder in beiden ortho-Positionen oder in einer ortho- und in der para-Position nicht substituiert. Die verbleibenden Ring-Kohlenstoffatome können substituiert sein. Die Wahl des Substituenten ist nicht besonders beschränkt, sofern der Substituent die Reaktion des Phenols mit dem Aldehyd nicht nachteilig beeinflusst. Beispiele substituierter Phenole sind alkylsubstituierte, alkoxysubstituierte, arylsubstituierte und aryloxysubstituierte Phenole.

Die grundsätzliche Struktur eines Phenolharzes vom Benzylethertyp weist neben -CH₂- verknüpften Phenol-Einheiten -CH₂-O-CH₂- verknüpfte Phenol-Einheiten auf und lässt sich beispielhaft (in Bezug auf ein nur mit Formaldehyd umgesetztes Produkt) wie folgt darstellen

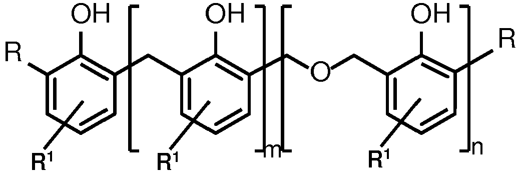

Die unterschiedlichen Einheiten sind typischerweise statistisch verteilt. Hierin ist R¹ jeweils unabhängig (insbesondere von m und n) Wasserstoff oder ein phenolischer Alkyl-Substituent von C 1 - 26 (gesättigt oder ungesättigt, geradkettig oder verzweigt) in ortho-, meta- oder para-Stellung zur phenolischen Hydroxy-Gruppe; die Summe von m und n beträgt mindestens 2 und das Verhältnis m/n ist mindestens 1; R ist unabhängig Wasserstoff, - CH₂OH oder CH₂O-R² mit R² = einen C1 bis C9 Kohlenwasserstoff. Der Rest R² kann geradkettig oder verzweigt, gesättigt oder ungesättigt sein.

Die vorstehend genannten Substituenten haben beispielsweise 1 bis 26, bevorzugt 1 bis 15 Kohlenstoffatome. Beispiele geeigneter Phenole sind o-Kresol, m-Kresol, p-Kresol, 3,5-Xylenol, 3,4-Xylenol, 3,4,5-Trimethylphenol, 3-Ethylphenol, 3,5-Diethylphenol, p-Butylphenol, 3,5-Dibutylphenol, p-Amylphenol, Cyclohexylphenol, p-Octylphenol, p-Nonylphenol, Cardanol, 3,5-Dicyclohexylphenol, p-Crotylphenol, p-Phenylphenol, 3,5-Dimethoxyphenol und p-Phenoxyphenol.

Besonders bevorzugt ist Phenol selbst. Auch höher kondensierte Phenole, wie Bisphenol A, sind geeignet. Darüber hinaus eignen sich auch mehrwertige Phenole, die mehr als eine phenolische Hydroxylgruppe aufweisen.

Bevorzugte mehrwertige Phenole weisen 2 bis 4 phenolische Hydroxylgruppen auf. Spezielle Beispiele geeigneter mehrwertiger Phenole sind Brenzkatechin, Resorcin, Hydrochinon, Pyrogallol, Phloroglucin, 2,5-Dimethylresorcin, 4,5-Dimethylresorcin, 5-Methylresorcin, Cardol oder 5-Ethylresorcin. Es können auch Gemische aus verschiedenen ein- und mehrwertigen und/oder substituierten und/oder kondensierten Phenolkomponenten für die Herstellung der Polyolkomponente verwendet werden.

In einer Ausführungsform werden Phenole der allgemeinen Formel I: 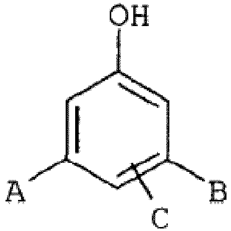 zur Herstellung der Phenol-Formaldehyd-Harzkomponente verwendet, wobei A, B und C unabhängig voneinander ausgewählt sind aus: einem Wasserstoffatom, einem verzweigten oder unverzweigten, Alkyl- oder Alkenylrest, der beispielsweise 1 bis 26, vorzugsweise 1 bis 15 Kohlenstoffatome aufweisen kann, einem verzweigten oder unverzweigten Alkoxyrest, der beispielsweise 1 bis 26, vorzugsweise 1 bis 15 Kohlenstoffatome aufweisen kann, einem verzweigten oder unverzweigten Alkenoxyrest, der beispielsweise 1 bis 26, vorzugsweise 1 bis 15 Kohlenstoffatome aufweisen kann, einem Aryl- oder Alkylarylrest, wie beispielsweise Bisphenyle.

Als weiteres Aldehyd zur Herstellung der Phenol-Formaldehyd-Harzkomponente eignen sich neben Formaldehyd auch zusätzlich Aldehyde der Formel:

R-CHO

wobei R ein Kohlenstoffatomrest mit vorzugsweise 2 bis 8, besonders bevorzugt 1 bis 3 Kohlenstoffatomen ist. Spezielle Beispiele sind Acetaldehyd, Propionaldehyd, Furfurylaldehyd und Benzaldehyd. Besonders bevorzugt wird Formaldehyd eingesetzt, entweder in seiner wässrigen Form, als para-Formaldehyd oder Trioxan.

Um Phenolharze vom Benzylethertyp zu erhalten, wird vorzugsweise eine mindestens äquivalente Molzahl an Aldehyd-Verbindung, bezogen auf die Molzahl der Phenol-Verbindung, eingesetzt. Bevorzugt beträgt das Molverhältnis Aldehyd zu Phenol 1,05 : 1,0 bis 2,5 : 1, besonders bevorzugt 1,1 : 1 bis 2,2 : 1, insbesondere bevorzugt 1,2 : 1 bis 2,0 : 1.

Als weitere Reaktionskomponente können nach der EP 0177871 A2 aliphatische Monoalkohole mit ein bis acht Kohlenstoffatomen zugesetzt werden. Durch die Alkoxylierung sollen die Phenol-Formaldehyd-Harze eine erhöhte thermische Stabilität besitzen und eine längere Sandlebenszeit aufweisen.

Die Herstellung des Phenolharz vom Benzylethertyp erfolgt nach dem Fachmann bekannten Verfahren. Dabei werden das Phenol und das Aldehyd unter im Wesentlichen wasserfreien Bedingungen in Gegenwart eines zweiwertigen Metallions, bei Temperaturen von vorzugsweise weniger als 130°C umgesetzt. Das entstehende Wasser wird abdestilliert. Dazu kann der Reaktionsmischung ein geeignetes Schleppmittel zugesetzt werden, beispielsweise Toluol oder Xylol, oder die Destillation wird bei reduziertem Druck durchgeführt.

Besonders geeignete Phenolharze vom Benzylethertyp sind unter der Bezeichnung "ortho-ortho"-Novolake " oder "high-ortho"-Novolake bekannt. Diese sind durch Kondensation von Phenolen mit Formaldehyd in schwach saurem Medium (pH <7) unter Verwendung geeigneter Katalysatoren erhältlich.

Zur Herstellung von Phenolharzen vom Benzylethertyp geeignete Katalysatoren sind Salze zweiwertiger Ionen von Metallen, wie Mn, Zn, Cd, Mg, Co, Ni, Fe, Pb, Ca und Ba, insbesondere Zn-Salze. Bevorzugt wird Zinkacetat verwendet. Die eingesetzte Menge ist nicht kritisch. Typische Mengen an Metallkatalysator betragen 0,02 bis 0,3 Gew.%, bevorzugt 0,02 bis 0,15 Gew.%, bezogen auf die Gesamtmenge an Phenol-Verbindung und Aldehyd-Verbindung.

Solche Harze sind z.B. in US 3485797 und in EP 1137500 B1 beschrieben, auf deren Offenbarung hiermit sowohl hinsichtlich der Phenolharze vom Benzylethertyp selbst, als auch hinsichtlich ihrer Herstellung ausdrücklich Bezug genommen wird.

Überraschenderweise wurde nun gefunden, dass der Zusatz von Silikontensiden zu dem Bindemittel die Fließfähigkeit der Formstoffmischung verbessert. In zahlreichen Versuchen stellte sich heraus, dass Bindemittel mit einer guten Fließfähigkeit auch eine niedrige Oberflächenspannung aufweisen. Überraschenderweise wurde gefunden, dass Silikontenside in der Lage sind die Oberflächenspannung deutlich zu reduzieren. Weiterhin wurde überraschend gefunden, dass die Silikontenside in der Lage sind, die ungewünschte Sandanhaftung bzw. die Anhaftung des Formgrundstoffes im Kernkasten zu reduzieren. Dazu reichen schon geringe Zugabemengen aus, um eine deutliche Reduzierung zu erzielen.

Bekannte Fluortenside und nichtionische Tenside auf Basis einer ethoxylierten und/oder propoxylierten Kohlenstoffalkylkette zeigen keine Wirkung. Dieses gilt auch für klassische anionische und amphotere Tenside.

Die erfindungsgemäß eingesetzten Silikontenside weisen beispielsweise folgende typische Struktur auf: 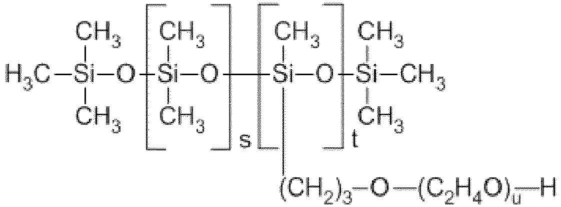 wobei s = 1 bis 40 und t = 1-150, vorzugsweise t = 1 bis 4 und insbesondere 1 oder 2, in der Poly (dimethylsiloxan) Kette stehen und u = 1 bis 150, insbesondere 4 bis 20 darstellt und aus Ethylenoxid (Beispielformel nur EO) und/oder Propylenoxideinheiten bestehen kann. Bevorzugt sind Ethylenoxideinheiten von 1-80, insbesondere bevorzugt von 4 bis 20. Die sich dabei ausbildende endständige Hydroxylgruppe kann optional mit einem C₁ - C₁₈ Alkohol, bevorzugt C₁ - C₁₂ und insbesondere bevorzugt C₁ - C₄ endgruppenverschlossen sein. Bevorzugt ist eine endständige OH-Funktionalität.

Weitere geeignete Silikontenside weisen folgende beispielhafte Struktur auf: 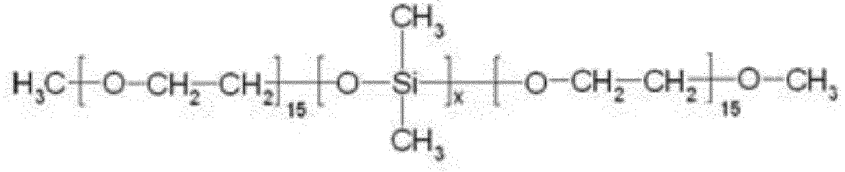 wobei x für 1 bis 300 Poly (dimethylsiloxan) Einheiten steht. Die beiden Seitenketten weisen 1-80, insbesondere bevorzugt von 4 bis 20, Ethylenoxid (Beispielformel 15 x EO) und/oder Propylenoxideinheiten auf. Bevorzugt sind Ethylenoxideinheiten. Die sich dabei ausbildende endständige Hydroxylgruppe kann optional mit einem C₁ - C₁₈ Alkohol, bevorzugt C₁ - C₁₂ und insbesondere bevorzugt C₁ - C₄ endgruppenverschlossen sein. Bevorzugt ist eine endständige OH-Funktionalität (Beispielformel endgruppenverschlossen mit Methanol).

Es können einzelne Silikontenside verwendet werden, aber auch Mischungen von Silikontensiden untereinander sind möglich. Hierbei spielt es keine Rolle, ob das Silikontensid in der Phenolharzkomponente oder in der Isocyanatkomponente gelöst ist. Auch eine separate Zugabe zu der Formstoffmischung als Reinstoff oder verdünnt in einem Trägermedium ist möglich.

Bevorzugt wird das Silikontensid oder die Mischungen von Silikontensiden untereinander in einer Konzentration von 0,001 bis 1,0 Gew%, bevorzugt von 0,001 bis 0,8 Gew % und insbesondere bevorzugt von 0,002 bis 0,5 Gew%, bezogen auf die Summe aus Phenolharz- und Isocyanatkomponente verwendet.

Bevorzugt wird das Silikontensid oder die Mischungen von Silikontensiden untereinander in einer Konzentration von 0,000005 bis 0,02 Gew%, bevorzugt von 0,000005 bis 0,016 Gew % und insbesondere bevorzugt von 0,00001 bis 0,010 Gew%, bezogen auf die Formstoffmischung verwendet.

Bevorzugt enthält das Bindemittel weniger als 2,0 Gew% Wasser, bevorzugt weniger als 1,5 Gew% und insbesondere bevorzugt weniger als 1,0 Gew% Wasser, bezogen auf das fertige Bindemittel bestehend aus Phenolharz und Isocyanatkomponente. Das gewährleistet, dass sich beim Härtungsprozess mittels tertiärem Amin keine schaumartige Polyurethanstruktur ausbildet.

Die Isocyanatkomponente des Bindemittelsystems umfasst ein aliphatisches, cycloaliphatisches oder aromatisches Polyisocyanat, bevorzugt mit im Mittel 2 bis 5 Isocyanatgruppen pro Molekül. Je nach den gewünschten Eigenschaften können auch Gemische von Isocyanaten eingesetzt werden.

Geeignete Polyisocyanate umfassen aliphatische Polyisocyanate, wie z.B. Hexamethylendiisocyanat, alicyclische Polyisocyanate wie z.B. 4,4'-Dicyclohexylmethandiisocyanat und Dimethylderivate hiervon. Beispiele geeigneter aromatischer Polyisocyanate sind Toluol-2,4-diisocyanat, Toluol-2,6-diisocyanat, 1,5-Naphthalendiisocyanat, Triphenylmethantriisocyanat, Xylylendiisocyanat und Methylderivate hiervon, sowie Polymethylenpolyphenylisocyanate. Insbesondere bevorzugte Polyisocyanate sind aromatische Polyisocyanate, besonders bevorzugt sind Polymethylenpolyphenylpolyisocyanate wie z.B. technisches 4,4'-Diphenylmethandiisocyanat, d.h. 4,4'-Diphenylmethandiisocyanat mit einem Anteil an Isomeren und höheren Homologen.

Die Polyisocyanate können auch derivatisiert sein, indem zweiwertige Isocyanate derart miteinander umgesetzt werden, dass ein Teil ihrer Isocyanatgruppen zu Biuret-, Allophanat-, Uretdion - oder Carbodiimidgruppen derivatisiert ist. Interessant sind z.B. Uretdion -Gruppen aufweisende Dimerisierungsprodukte, z.B. von MDI oder TDI. Derartige derivatisierte Polyisocyanate werden vorzugsweise aber nur als ein Bestandteil neben obigen nicht-derivatsierten Polyisocyanaten eingesetzt.

Bevorzugt wird das Polyisocyanat in einer Menge eingesetzt, dass die Anzahl der Isocyanatgruppen von 80 bis 120 %, bezogen auf die Anzahl der freien Hydroxylgruppen des Harzes, beträgt.

Die Phenolharzkomponente bzw. die Isocyanatkomponente des Bindemittelsystems wird bevorzugt als Lösung in einem organischen Lösemittel oder einer Kombination von organischen Lösemitteln eingesetzt. Lösemittel können z.B. deshalb erforderlich sein, um die Komponenten des Bindemittels in einem ausreichend niedrigviskosen Zustand zu halten. Dieser ist u. a. erforderlich, um eine gleichmäßige Vernetzung des feuerfesten Formstoffes und dessen Rieselfähigkeit zu erhalten.

Als Lösemittel für die Phenolharzkomponente können neben den z.B. unter der Bezeichnung Solvent Naphtha bekannten aromatischen Lösemitteln weiterhin sauerstoffreiche polare, organische Lösemittel verwendet werden. Geeignet sind vor allem Dicarbonsäureester, Glykoletherester, Glykoldiester, Glykoldiether, cyclische Ketone, cyclische Ester (Lactone), cyclische Carbonate oder Kieselsäureester oder deren Mischungen. Bevorzugt werden Dicarbonsäureester, cyclische Ketone und cyclische Carbonate verwendet.

Typische Dicarbonsäureester weisen die Formel R₁OOC-R₂-COOR₁ auf, wobei R₁ jeweils unabhängig voneinander (insbesondere vom zweiten R₁) eine Alkylgruppe mit 1 bis 12, bevorzugt 1 bis 6, Kohlenstoffatomen darstellt und R₂ eine Kohlenwasserstoffgruppe mit 1 bis 4 Kohlenstoffatomen ist. Beispiele sind Dimethylester von Carbonsäuren mit 4 bis 6 Kohlenstoffatomen, die z.B. unter der Bezeichnung Dibasic Ester von DuPont erhältlich sind.

Typische Glykoletherester sind Verbindungen der Formel R₃-O-R₄-OOCR₅, wobei R₃ eine Alkylgruppe mit 1 bis 4 Kohlenstoffatomen darstellt, R₄ eine Kohlenwasserstoffgruppe mit 2 bis 4 Kohlenstoffatomen ist und R₅ eine Alkylgruppe mit 1 bis 3 Kohlenstoffatomen ist, z.B. Butylglykolacetat, bevorzugt sind Glykoletheracetate. Typische Glykoldiester weisen entsprechend die allgemeine Formel R₃COO-R₄-OOCRs auf, wobei R₃ bis R₅ wie oben definiert sind und die Reste jeweils unabhängig voneinander ausgewählt werden (z.B. Propylenglykoldiacetat). Bevorzugt sind Glykoldiacetate. Glykoldiether lassen sich durch die Formel Rs-O-R₄-O-R₅ charakterisieren, in der R₃ bis R₅ wie oben definiert sind und die Reste jeweils unabhängig voneinander ausgewählt werden (z.B, Dipropylenglykoldimethylether).

Typische cyclische Ketone, cyclische Ester und cyclische Carbonate mit 4 bis 5 Kohlenstoffatomen sind ebenfalls geeignet (z.B. Propylencarbonat). Die Kohlenstoffe können verzweigt oder unverzweigt verknüpft sein und gesättigt oder ungesättigt vorliegen.

Geeignet sind auch Fettsäurester wie z.B. Rapsölfettsäuremethylester oder Ölsäurebutylester
Als Lösemittel für das Polyisocyanat werden entweder aromatische Lösemittel, die oben genannten polaren Lösemittel oder Gemische davon eingesetzt. Auch Fettsäureester und Kieselsäureester sind geeignet.

Der Anteil des Lösemittels am Bindemittel kann bis zu 50 Gew.% betragen.

Neben den bereits erwähnten Bestandteilen können die Bindemittelsysteme weitere Additive enthalten, z. B. Silane (z.B. gemäß EP 1137500 B1), interne Trennmittel, z. B. Fettalkohole (z.B. gemäß US 4,602,069), trocknende Öle (z.B. gemäß US 4,268,425), Komplexbildner (z.B. gemäß US 5,447,968) und Additive zur Verlängerung der Verarbeitungszeit (z.B. gemäß US 4,540,724) oder Gemische davon.

Als feuerfester Formgrundstoff (nachfolgend auch kurz Formgrundstoff) können für die Herstellung von Gießformen übliche und bekannte Materialien sowie deren Mischungen verwendet werden. Geeignet sind beispielsweise Quarz-Sand, ZirkonSand, Chromerzsand, Olivin, Vermiculit, Bauxit, Schamotte sowie sogenannte künstliche Formgrundstoffe, also Formgrundstoffe, die durch industrielle Verfahren der Formgebung in sphärische oder annähernd sphärische (zum Beispiel ellipsoide) Form gebracht wurden.

Beispiele hierfür sind Glasperlen, Glasgranulat oder künstliche, spherische, keramische Sande - sogenannte Cerabeads® aber auch Spherichrome®, SpherOX® oder "Carboaccucast", sowie Mikrohohlkugeln wie sie unter anderem als Komponente aus Flugaschen isoliert werden können, wie z.B. Aluminiumsilikathohlkugeln (sog. Microspheres). Mischungen der genannten Feuerfeststoffe sind ebenfalls möglich.

Besonders bevorzugt sind Formgrundstoffe, die mehr als 50 Gew.% Quarzsand bezogen auf den feuerfesten Formgrundstoff enthalten. Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C.

Der feuerfeste Formgrundstoff macht vorzugsweise größer 80 Gew.%, insbesondere größer 90 Gew.%, besonders bevorzugt größer 95 Gew.%, der Formstoffmischung aus.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die Partikelgröße lässt sich z.B. durch Siebung nach DIN ISO 3310 bestimmen. Besonders bevorzugt sind Teilchenformen mit größter Längenausdehnung zu kleinster Längenausdehnung (rechtwinkelig zueinander und jeweils für alle Raumrichtungen) von 1:1 bis 1:5 oder 1:1 bis 1:3, d.h. solche die z.B. nicht faserförmig sind.

Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Geeignete Katalysatoren sind tertiäre Amine. Für das PUCB Verfahren werden flüchtige tertiäre Amine eingesetzt wie Trimethylamin ("TMA", CAS RN 75-50-3), Dimethylethylamin ("DMEA", CAS 75-64-9), Dimethylisopropylamin ("DMIPA", CAS 996-35-0), Dimethylpropylamin ("DMPA", CAS RN 926-63-6) und Triethylamin ("TEA", CAS RN 121-44-8).

Für das PUNB werden flüssige tertiäre Amine eingesetzt. Dies schließt bei Raumtemperatur (25°C) flüssige tertiäre Amine ein als auch solche, welche nach Erwärmen auf z.B. 40° flüssig werden oder solche, die in einem geeigneten Lösungsmittel gelöst sind. Beispiele sind 4-(C1-C4-Alkyl)pyridine, Tris(3-dimethylamino)propylamin, Isoquinolin, Arylpyridine wie Phenylpyridin, Pyridin, Acridin, 2-Methoxypyridin, Pyridazin, 3-Chloropyridin, Quinolin, N-methylimidazol, N-ethylimidazol, 4,4'-Dipyridin, 4- Phenylpropylpyridin, 1-Methylbenzimidazol und 1,4-Thiazine.

Außerdem betrifft die Erfindung ein Verfahren zur Herstellung der Formstoffmischungen umfassend
(a) Vermischen von feuerfesten Formgrundstoffen mit dem Bindemittel, wobei das Silikontensid Teil des Bindemittels ist oder später zugegeben ist in einer Menge von 0,2 bis 5 Gew.%, bevorzugt 0,3 bis 4 Gew.%, besonders bevorzugt 0,4 bis 3,5 Gew.%, bezogen auf die Menge der feuerfesten Formgrundstoffe, und einen gleichzeitig (beim PUNB Verfahren) oder separat später (beim PUCB Verfahren) zugesetzten Katalysator zum Erhalt einer Formstoffmischung,
(b) Einbringen der in Schritt (a) erhaltenen Formstoffmischung in ein Formwerkzeug;
(c) ggf. Zusetzen des separat später zugesetzten Katalysators (PUCB) und Härten der Formstoffmischung im Formwerkzeug mit dem Katalysator, um einen Kern oder eine Gießform zu erhalten; und
(d) anschließendes Trennen des Kerns oder der Gießform vom Werkzeug und ggf. weiteres Härten.

Für die Herstellung der Formstoffmischung können zuerst die Komponenten des Bindemittelsystems vereinigt und dann zu dem feuerfesten Formgrundstoff zugegeben werden. Es ist jedoch auch möglich, die Komponenten des Bindemittels gleichzeitig oder nacheinander in beliebiger Reihenfolge zu dem feuerfesten Formgrundstoff zu geben.

Um eine gleichmäßige Mischung der Komponenten der Formstoffmischung zu erzielen, können übliche Verfahren verwendet werden. Die Formstoffmischung kann zusätzlich gegebenenfalls andere konventionelle Bestandteile, wie Eisenoxid, gemahlene Flachsfasern, Holzmehlgranulate, Pech und refraktäre Metalle enthalten.

Erfindungsgemäß kann die Aushärtung nach dem PUCB- oder nach dem PUNB-Verfahren erfolgen. Im Falle des PUCB-Verfahrens wird zum Härten ein niedrigsiedendes tertiäres Amin mittels eines inerten Trägergases gasförmig oder als Aerosol durch die geformte Formstoffmischung geleitet. Die Zugabe eines separaten Katalysators unterbleibt. Es können alle bekannten Cold Box-Aminkatalysatoren verwendet werden. Im Falle des PUNB-Verfahrens kann der Amin- oder Metallkatalysator bereits im Bindemittel gelöst sein oder als separate Komponente dem Feuerfeststoff zugemischt werden, wobei die Zugabemenge ca. 0,1 Gew.% - ca. 5 Gew.% bezogen auf die Formstoffmischung beträgt.

Die nach diesem Verfahren hergestellten Formkörper können an sich jede auf dem Gebiet der Gießerei übliche Form aufweisen. In einer bevorzugten Ausführungsform liegen die Formkörper in Form von Gießereiformen, Kernen oder Speisern vor. Diese zeichnen sich durch eine hohe mechanische Stabilität aus.

Weiter betrifft die Erfindung die Verwendung dieses Formkörpers für den Metallguss, insbesondere Eisen- sowie Aluminiumguss.

Die Erfindung wird im Weiteren anhand von bevorzugten Ausführungsformen bzw. Versuchsbeispielen näher erläutert, ohne auf diese beschränkt zu sein.

### Versuchsbeispiele

### Eingesetzte Komponenten

ECOCURE 10 SL 4441 PART 1 - Benzyletherharz in aromatischen Lösemitteln, Lieferant ASK Chemicals GmbH
ECOCURE 20 SL 4429 PART 2 - uretonimin/carbodiimid modifiziertes MDI, lösemittelfrei, Lieferant ASK Chemicals GmbH
KATALYSATOR 706 - Dimethylpropylamin, Lieferant ASK Chemicals GmbH Quarzsand H 32 - Lieferant Quarzwerke GmbH
Alle Prozent-Angaben meinen Gew%.

### Bestimmung der Oberflächenspannung

Jeweils 0,50% der in der u.a. Tabelle genannten Stoffe wurden einzeln in ECOCURE 10 SL4441 PART 1 klar gelöst. Unmittelbar vor der Messung der Oberflächenspannung, wurde eine homogene, luftblasenfreie Mischung aus 55% ECOCURE 10 SL 4441 PART 1 (ohne, bzw. mit den einzeln gelösten Stoffen) und 45% ECOCURE 20 SL 4429 PART 2 hergestellt. Bedingt durch die langsam einsetzende Reaktion zwischen dem in PART 1 enthaltenen Benzyletherharz und dem in PART 2 enthaltenen MDI durfte die Mischung nicht älter als 20 Minuten sein, bevor sie vermessen wurde.

200g der homogenen, klaren und luftblasenfreien Mischung wurde in einen PTFE-Becher gegeben und die Oberflächenspannung (in mN/mm) bei Raumtemperatur gemessen. Hierzu wurde ein Krüss Force Tensiometer 100 (Fa. Krüss) verwendet. Es wurde die Plattenmethode (angerauhte Platinplatte) nach Wilhelmy als Doppelbestimmung benutzt. Berührt eine senkrecht aufgehängte Platte eine flüssige Oberfläche oder Grenzfläche, dann wirkt auf diese Platte eine Kraft F, die mit der Oberflächenspannung korreliert.

**Tabelle 1**

| # | **erfindungsgemäß** | | |
|---|---|---|---|
| | | mN/mm | |
| A1 | Abil 8832 | 23,4 | INCI: Bis - PEG / PPG 20-20 Dimethicone, Fa. Evonik Industrie |
| A2 | Dow Corning TI 6021 W/O | 22,9 | INCI: PEG-10 Dimethicone, Fa. DOW Corning, HLB Wert 4 |
| A3 | Belsil 6031 | 27,7 | PEG/PPG-25/25 Dimethicone, Fa. Wacker Chemie GmbH |
| | | | |

| | **nicht erfindungsgemäß** | | |
|---|---|---|---|
| | | mN/mm | |
| B1 | ohne Tensid Zusatz | 31,4 | |
| B2 | Lucramol CO 26 | 31,4 | Rizinusöl+26 EO, Fa. Levaco Chemicals GmbH |
| B3 | Lucramol SO 21 | 31,4 | Sojaöl+21 EO, Fa Levaco Chemicals GmbH, HLB Wert 3,6 |
| B4 | Lucramul C13/3 | 31,5 | iso C₁₃Alkohol+3 EO, Fa. Levaco Chemicals GmbH |
| B5 | Lucramul C 13/5 | 31,5 | iso C₁₃Alkohol+5 EO, Fa. Levaco Chemicals GmbH |
| B6 | Lucramul C 13/8 | 31,5 | iso C₁₃ Alkohol+8EO, Fa. Levaco chemicals GmbH |
| B7 | Capstone FS 35 | 31,3 | nichtionisches Fluortensid 25% in Wasser, Fa. Chemours |
| B8 | Tego Betain F 50 | 31,4 | INCl: Cocamidopropylbetain, 40% in Wasser, Fa. Evonik Industrie |
| B9 | Texapon N 70 | 31,4 | INCl: Sodium laurylether (2 EO) sulfate, 70% in Wasser, Fa BASF SE |

Aus Tabelle 1 ist ersichtlich, welche Stoffe zu 0,50% in ECOCURE 10 SL 4441 PART 1 eingerührt wurden und in der Mischung mit ECOCURE 20 SL 4429 PART 2 auf ihre oberflächenspannungsreduzierende Wirkung hin untersucht wurden. Dabei zeigt sich, dass die erfindungsgemäßen Silikontenside (Beispiele A1-A3) die Oberflächenspannung deutlich reduzieren. Tenside bzw. Emulgatoren, deren lipophiler Rest durch eine Kohlenstoffalkylkette gebildet wird, zeigten keine Reduzierung der Oberflächenspannung, Beispiel B1-B9. Interessant ist hierbei der Vergleicht von A2 zu B3, weil die Tenside einen etwa gleichen HLB Wert aufweisen (Methode nach Griffin, HLB steht für engl. hydrophilic-lipophilic balance) trotzdem aber sehr unterschiedlich wirksam sind.

**Tabelle 2**

| # | % Dow Corning TI 6021 W/O | mN/mm | |
|---|---|---|---|
| B10 | 0% | 35,2 | Vergleich |
| A4 | 0,01% | 31,6 | erfindungsgemäß |
| A5 | 0,02% | 27,2 | erfindungsgemäß |
| A6 | 0,03% | 25 | erfindungsgemäß |
| A7 | 0,04% | 24,6 | erfindungsgemäß |
| A8 | 0,05% | 24,1 | erfindungsgemäß |
| A9 | 0,10% | 24 | erfindungsgemäß |
| A10 | 0,15% | 23,4 | erfindungsgemäß |

Aus Tabelle 2 ist ersichtlich, welche Konzentration Dow Corning TI 6021 W/O in ECOCURE 10 SL 4441 PART 1 eingerührt wurden und in der Mischung mit ECOCURE 20 SL 4429 PART 2 auf ihre oberflächenspannungsreduzierende Wirkung hin untersucht wurden. Dabei zeigte sich, dass einer der erfindungsgemäßen Silikonemulgatoren (Beispiele A4-A10) die Oberflächenspannung deutlich reduziert. Diese Reduzierung zeigt sich selbst bei sehr geringen Mengen. Zum Vergleich hatte Wasser einen Wert von 68,6 mN/mm.

### Bestimmung des Sandrückstandes/Klebeneigung im Kernkasten

In einem Hobart Mischer wurde eine Sandmischung aus Quarzsand H 32, plus 0,60% ECOCURE 10 SL 4441 PART 1 (ohne bzw. mit dem erfindungsgemäßen Silikontensid) und 0,50% ECOCURE 20 SL 4429 PART 2 homogen über 3 Minuten vermischt. Diese Sandmischung wurde in eine Kernschießmaschine überführt und es wurde ein Kern mit einer Dimension (I x b x h) von 11cm x 5cm x 1,2cm mit einem Schießdruck von 4 bar mittels Druckluft in die Form gebracht. Die Form bestand aus Stahl und wurde vor dem ersten Benutzen mit Aceton entfettet und nicht mit einem externen Formtrennmittel behandelt. Mittels KATALYSATOR 706 (1,0 ml, Begasungszeit 10 sec bei 2 bar Spüldruck) wurde der Sand ausgehärtet. Nach dem Aushärten wurde der Kern entnommen und es wurden insgesamt 20 Kerne hergestellt, ohne das die metallische Form in dieser Zeit gereinigt oder mit einem externen Trennmittel behandelt wurde. Nach den 20 Kernen entnahm man die metallische Form und der sich gebildete Sandhügel (direkt unter den zwei Einschussdüsen) wurde mechanisch entfernt und ausgewogen.

**Tabelle 3**

| # | % Dow Corninq TI 6021 W/O | Sandrückstand nach 20 Schuß in mg | % weniqer Rückstand | |
|---|---|---|---|---|
| B10 | 0% | 241 | 0 | Vergleich |
| A4 | 0,01% | 179 | 25 | erfindungsgemäß |
| A5 | 0,02% | 160 | 34 | erfindungsgemäß |
| A6 | 0,03% | 149 | 38 | erfindungsgemäß |
| A7 | 0,04% | 134 | 44 | erfindungsgemäß |
| A8 | 0,05% | 128 | 47 | erfindungsgemäß |

Tabelle 3 zeigt, das schon geringe Mengen erfindungsgemäßes Silikontensid (A4) zugesetzt in der angegebenen Menge in ECOCURE 10 SL 4441 PART 1 den Sandrückstand um 25% reduzieren können.

### Bestimmung des Fließverhaltens bei unterschiedlichen Schießdrücken

In einem Hobart Mischer wurde eine Sandmischung aus Quarzsand H 32, plus 0,60% ECOCURE 10 SL 4441 PART 1 (ohne bzw. mit den aufgeführten Stoffen) und 0,50% ECOCURE 20 SL 4429 PART 2 homogen vermischt. Diese Sandmischung wurde in eine Kernschießmaschine, Model Laempe L 1 (Öffnung am Sandaustritt des Schießkopfs auf 5mm reduziert) überführt und wurden in einem vierer Kernkasten (4 fach GF Riegel) mit einem variablen Schießdruck mittels Druckluft und einer Schießzeit von 1 sec in die Form gebracht. Mittels KATALYSATOR 706 (1,0 ml, Begasungszeit 10 sec bei 2 bar Spüldruck) wurde die Formstoffmischung ausgehärtet. Nach dem Aushärten wurden die vier Kerne gemeinsam ausgewogen und damit die Menge an Formstoffmischung bestimmt, die während des Schusses in die Form befördert wurde. Die ausgeschossene Masse ist ein Anhaltspunkt dafür, wie fließfähig die Formstoffmischung ist. Nach jedem Schuss wurde der Schießkopf erneut zu 100% mit fertiger Formstoffmischung lose befüllt.

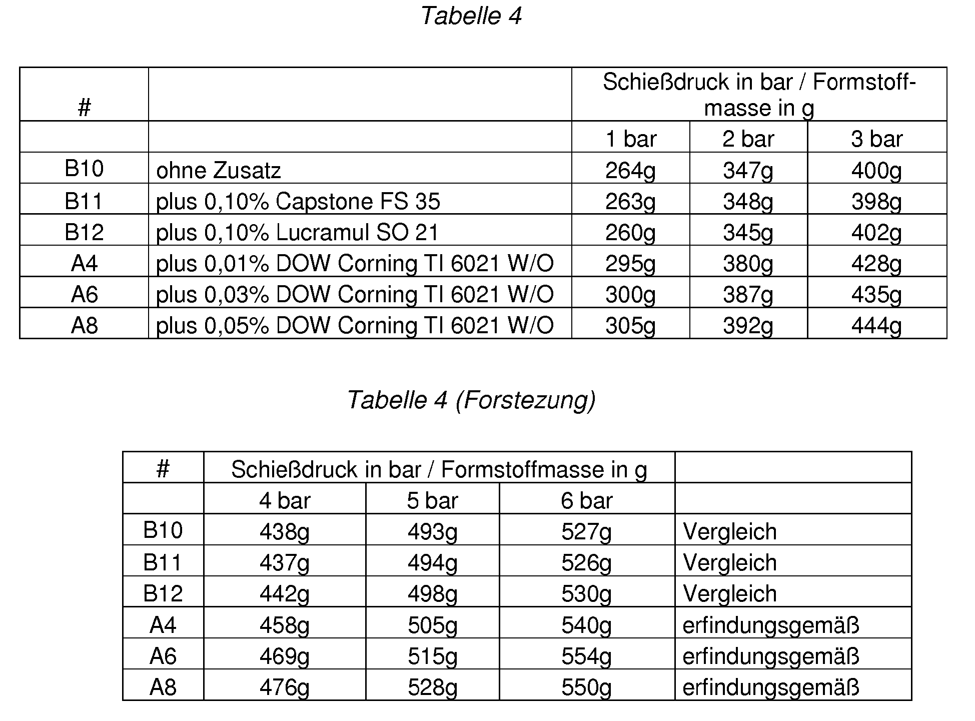

Tabelle 4 zeigt die durch vier Schußlöcher ausgetretene Masse Formstoffmischung. Es ist deutlich zu erkennen, dass schon 0,01 Gew. % erfindungsgemäßes Silikontensid die ausgeschossene Menge deutlich erhöht (A4 zu B10). Ein Zusatz von Fluortensid und auch die zehnfache Gew. % Menge von Lucramul SO 21 (welches den selben HLB Wert hat wie Dow Corning TI 6021 W/O) zeigte keine Erhöhung der ausgeschossenen Formstoffmenge.

Weiterhin wurden Biegefestigkeiten bestimmt. Diese zeigten, dass der Zusatz von Silikontensiden die Biegefestigkeiten nicht negativ beeinflusst.

## Patentansprüche

1. Formstoffmischung aufweisend:
- ein Phenolharz vom Benzylethertyp;
- eine oder mehrere Polyisocyanat-Verbindungen mit zumindest 2 Isocyanat-Gruppen pro Molekül; und
- ein Silikontensid umfassend neben zumindest einer -Si(C1-C3 alkyl)₂-O-Einheit zumindest eine Polyalkoxy-Gruppe und
- feuerfeste Formgrundstoffe.

2. Formstoffmischung nach Anspruch 1, wobei die Polyisocyanat-Verbindungen Diisocyanate sind.

3. Formstoffmischung nach zumindest einem der vorhergehenden Ansprüche, wobei zumindest das Phenolharz vom Benzylethertyp, die Polyisocyanat-Verbindung und das Silikontensid ein Bindemittel bilden und das Bindemittel enthält:
- 8 bis 70 Gew.%, insbesondere 10 bis 62 Gew.%, Phenolharz vom Benzylethertyp;
- 13 bis 78 Gew.%, insbesondere 17 bis 70 Gew.%, Polyisocyanat-Verbindungen; und
- 2 bis 57 Gew.%, insbesondere 3 bis 53 Gew.%, Lösungsmittel für das Phenolharz vom Benzylethertyp und die Polyisocyanat-Verbindungen.

4. Formstoffmischung nach zumindest einem der vorhergehenden Ansprüche, wobei die Alkoxy-Gruppen des Silikontensids Ethoxy-Gruppen, Propoxy-Gruppen, Butoxy-Gruppen oder gemischte Ethoxy-/Propoxy-Gruppen sind und auch unabhängig hiervon die Silikontenside pro Polyalkoxy-Gruppe vorzugsweise zumindest 4 Alkoxy-Einheiten aufweisen.

5. Formstoffmischung nach zumindest einem der vorhergehenden Ansprüche, wobei
a) die Polyalkoxy-Gruppe(n) des Silikontensids jeweils über ein Sauerstoffatom am Si-Atom gebunden ist/sind und/oder über ein C-Atom der Alklygruppe am Si; und/oder
b) auch unabhängig hiervon die Polyalkoxy-Gruppe(n) des Silikontensids endständige Hydroxylgruppe(n) aufweist/aufweisen.

6. Formstoffmischung nach zumindest einem der vorhergehenden Ansprüche, wobei das Silikontensid einen HLB Wert von 1 bis 6 aufweist.

7. Formstoffmischung nach zumindest einem der vorhergehenden Ansprüche, wobei das Silikontensid Polyethoxy -Gruppen aufweist.

8. Formstoffmischung nach zumindest einem der vorhergehenden Ansprüche, wobei das Silikontensid
in einer Konzentration von 0,001 - 1,0 Gew%, bevorzugt von 0,001 - 0,8 Gew % und insbesondere bevorzugt von 0,002% - 0,5 Gew%, bezogen auf die Summe an Phenolharz vom Benzylethertyp und Polyisocyanat eingesetzt wird und/oder in einer Konzentration von 0,000005 bis 0,02 Gew%, bevorzugt von 0,000005 bis 0,016 Gew % und insbesondere bevorzugt von 0,00001 bis 0,01 Gew%, bezogen auf die Formstoffmischung eingesetzt wird.

9. Formstoffmischung nach Anspruch 1, wobei die Formstoffmischung 0,4 bis 6 Gew.% Bindemittel umfassend Phenolharz vom Benzylethertyp, Polyisocyanat-Verbindung und Silikontensid; und
94 bis 99,6 Gew.% feuerfeste Formgrundstoffe
umfasst.

10. Formstoffmischung nach Anspruch 1 oder 9, wobei der feuerfeste Formgrundstoff ausgewählt ist aus einem oder mehreren Mitgliedern der Gruppe Olivin, Schamotte, Bauxit, Aluminiumsilikathohlkugeln, Glasperlen, Glasgranulat, synthetischen keramischen Formgrundstoffen und Siliciumdioxid, insbesondere in der Form von Quarzsand, Zirkonsand oder Chromerzsand.

11. Verfahren zur Herstellung eines Formkörpers als Gießform oder als Kern, umfassend
(i) Herstellen der Formstoffmischung gemäß einem der Ansprüche 1, 9 und 10;
(ii) Einbringen der Formstoffmischung oder deren Bestandteile in ein Formwerkzeug;
(iii) Härten der Formstoffmischung in dem Formwerkzeug mit zumindest einem tertiären Amin, um eine selbsttragende Formkörper zu erhalten; und
(iv) anschließendes Trennen der gehärteten Form vom Werkzeug und ggf. weiteres Härten, wodurch man einen ausgehärteten Formkörper erhält.

12. Verfahren nach Anspruch 11, wobei das tertiäre Amine ausgewählt ist aus einem oder mehreren Mitgliedern aus der Gruppe: Trimethylamin (TMA), Dimethylethylamin (DMEA), Dimethyl-n-propylamin (DMPA), Dimethyl-iso-propylamin (DMIPA), Diethylmethylamin (DEMA) Triethylamin (TEA), Tri n- propylamin, Triisopropylamin Tri-n-butylamin und Tri-isobutylamin. und 4-(C1-C4-Alkyl)pyridine wie Tris(3-dimethylamino)propylamin, Isoquinolin. Arylpyridine wie Phenylpyridin, Pyridin, Acridin, 2-Methoxypyridin, Pyridazin, 3- Chloro pyridin, Quinoline, N-methylimidazole, N-ethylimidazol, 4,4'-Dipyridin, 4- Phenylpropylpyridin, 1-Methylbenzimidazol und 1,4-Thiazine.

13. Form, Kern oder Speiser hergestellt nach dem Verfahren der Ansprüche 11 oder 12.

14. Verwendung der Form oder des Kerns hergestellt nach dem Verfahren der Ansprüche 11 oder 12 zum Metallguss, insbesondere Eisen- oder AluminiumGuss.

## Claims

1. A moulding material mixture comprising:
- a phenolic resin of the benzyl ether type;
- one or more polyisocyanate compounds having at least 2 isocyanate groups per molecule; and
- a silicone surfactant comprising at least one polyalkoxy group in addition to at least one unit -Si(C1-C3 alkyl)₂-O-, and
- basic refractory moulding materials.

2. The moulding material mixture according to claim 1, wherein the polyisocyanate compounds are diisocyanates.

3. The moulding material mixture according to at least one of the preceding claims, wherein at least the phenolic resin of the benzyl ether type, the polyisocyanate compound and the silicone surfactant form a binder, the binder containing:
- 8 to 70% by weight, especially 10 to 62% by weight, of phenolic resin of the benzyl ether type;
- 13 to 78% by weight, especially 17 to 70% by weight, of polyisocyanate compounds; and
- 2 to 57 % by weight, especially 3 to 53 % by weight, of solvents for the phenolic resin of the benzyl ether type and the polyisocyanate compounds.

4. The moulding material mixture according to at least one of the preceding claims, wherein the alkoxy groups of the silicone surfactant are ethoxy groups, propoxy groups, butoxy groups or mixed ethoxy/propoxy groups and also independently thereof the silicone surfactants preferably have at least 4 alkoxy units per polyalkoxy group.

5. The moulding material mixture according to at least one of the preceding claims, wherein
a) the polyalkoxy group(s) of the silicone surfactant is/are bonded to the Si atom via an oxygen atom and/or to the Si via a C atom of the alkyl group; and/or
(b) also independently thereof, the polyalkoxy group(s) of the silicone surfactant comprise(s) terminal hydroxyl group(s).

6. The moulding material mixture according to at least one of the preceding claims, wherein the silicone surfactant has an HLB value of 1 to 6.

7. The moulding material mixture according to at least one of the preceding claims, wherein the silicone surfactant comprises polyethoxy groups.

8. The moulding material mixture according to at least one of the preceding claims, wherein the silicone surfactant is employed in a concentration of 0.001 - 1.0% by weight, preferably of 0.001 - 0.8% by weight and particularly preferably of 0.002% - 0.5% by weight, based on the total of phenolic resin of the benzyl ether type and polyisocyanate and/or is employed in a concentration of 0.000005 to 0.02% by weight, preferably of 0.000005 to 0.016% by weight and particularly preferably of 0.00001 to 0.01% by weight, based on the moulding material mixture.

9. The moulding material mixture according to claim 1, wherein the moulding material mixture comprises 0.4 to 6% by weight of binder comprising phenolic resin of the benzylic ether type, polyisocyanate compound and silicone surfactant; and
94 to 99.6 % by weight of basic refractory moulding materials.

10. The moulding material mixture according to claim 1 or 9, wherein the basic refractory moulding material is selected among one or more members of the group consiting of olivine, fireclay, bauxite, hollow aluminium silicate spheres, glass beads, glass granules, synthetic ceramic moulding materials and silicon dioxide, especially in the form of quartz sand, zircon sand or chrome ore sand.

11. A process for the production of a moulded part as a casting mould or as a core, comprising the steps of
(i) preparing the moulding material mixture according to one of the claims 1, 9 and 10;
(ii) introducing the moulding material mixture or components thereof into a moulding tool;
(iii) curing the moulding material mixture in the moulding tool using at least one tertiary amine to obtain a self-supporting moulded body; and
(iv) subsequently separating the cured mould from the tool and further curing, if required, resulting in a cured moulded body.

12. The process according to claim 11, wherein the tertiary amine is selected from one or more members of the group consisting of: trimethylamine (TMA), dimethylethylamine (DMEA), dimethyl-n-propylamine (DMPA), dimethyl-iso-propylamine (DMIPA), diethylmethylamine (DEMA), triethylamine (TEA), tri-n-propylamine, triisopropylamine, tri-n-butylamine and tri-isobutylamine, and 4-(C1-C4 alkyl)pyridines, such as tris(3-dimethylamino)propylamine, isoquinoline, arylpyridines, such as phenylpyridine, pyridine, acridine, 2-methoxypyridine, pyridazine, 3-chloropyridine, quinoline, N-methylimidazole, N-ethylimidazole, 4,4'-dipyridine, 4-phenylpropyl-pyridine, 1-methylbenzimidazole and 1,4-thiazines.

13. A mould, core or riser prepared according to the process of the claims 11 or 12.

14. Use of the mould or the core produced according to the process of the claims 11 or 12 for metal casting, especially iron or aluminum casting.

## Revendications

1. Mélange de matières de moulage comprenant :
- une résine phénolique de type éther benzylique ;
- un ou plusieurs composés de polyisocyanate comprenant au moins 2 groupes isocyanate par molécule ; et
- un tensioactif de silicone comprenant, hormis au moins un motif - Si(alkyle en C₁-C₃)₂-O-, au moins un groupe polyalcoxy et
- des matières de base de moulage réfractaires.

2. Mélange de matières de moulage selon la revendication 1, dans lequel les composés de polyisocyanate sont des diisocyanates.

3. Mélange de matières de moulage selon au moins l'une des revendications précédentes, dans lequel au moins la résine phénolique de type éther benzylique, les composés de polyisocyanate et le tensioactif de silicone forment un liant et le liant contient :
- 8 à 70 % en poids, en particulier 10 à 62 % en poids de résine phénolique de type éther benzylique ;
- 13 à 78 % en poids, en particulier 17 à 70 % en poids, de composés de polyisocyanate ; et
- 2 à 57 % en poids, en particulier 3 à 53 % en poids, de solvants pour la résine phénolique de type éther benzylique et les composés de polyisocyanate.

4. Mélange de matières de moulage selon au moins l'une des revendications précédentes, dans lequel les groupes alcoxy du tensioactif de silicone comprennent des groupes éthoxy, des groupes propoxy, des groupes butoxy, ou des groupes mixtes éthoxy/propoxy et, indépendamment de ceux-ci également, les tensioactifs de silicone comprennent de préférence au moins 4 motifs alcoxy par groupe polyoxy.

5. Mélange de matières de moulage selon au moins l'une des revendications précédentes, dans lequel
a) le ou les groupes polyalcoxy du tensioactif de silicone est/sont lié(s) respectivement par le biais d'un atome d'oxygène à l'atome de Si et/ou par le biais d'un atome de C du groupe alkyle au Si ; et/ou
b) indépendamment de ceux-ci également, le ou les groupes polyalcoxy du tensioactif de silicone comprend/comprennent un ou des groupes hydroxyle terminaux.

6. Mélange de matières de moulage selon au moins l'une des revendications précédentes, dans lequel le tensioactif de silicone présente une valeur HLB de 1 à 6.

7. Mélange de matières de moulage selon au moins l'une des revendications précédentes, dans lequel le tensioactif de silicone comprend des groupes polyéthoxy.

8. Mélange de matières de moulage selon au moins l'une des revendications précédentes, dans lequel le tensioactif de silicone
est mis en œuvre en une concentration de 0,001 à 1,0 % en poids, de préférence de 0,001 à 0,8 % en poids et de manière particulièrement préférée de 0,002 % à 0,5 % en poids, par rapport à la somme de la résine phénolique de type éther benzylique et du polyisocyanate et/ou
en une concentration de 0,000005 à 0,02 % en poids, de préférence de 0,000005 à 0,016 % en poids et de manière particulièrement préférée de 0,00001 % à 0,01 % en poids, par rapport au mélange de matières de moulage.

9. Mélange de matières de moulage selon la revendication 1, dans lequel le mélange de matières de moulage comprend
0,4 à 6 % en poids de liants comprenant de la résine phénolique de type éther benzylique, du composé de polyisocyanate et du tensioactif de silicone ; et
94 à 99,6 % en poids de matières de base de moulage réfractaires.

10. Mélange de matières de moulage selon la revendication 1 ou 9, dans lequel la matière de base de moulage réfractaire est choisie parmi un ou plusieurs éléments du groupe olivine, argile réfractaire, bauxite, billes creuses de silicate d'aluminium, perles de verre, granulé de verre, matières de base de moulage céramiques synthétiques et dioxyde de silicium, en particulier sous la forme de sable de quartz, sable de zircone ou sable de chromite.

11. Procédé de fabrication d'un corps moulé sous forme de moule de coulée ou de noyau, comprenant
(i) la fabrication du mélange de matières de moulage selon l'une des revendications 1, 9 et 10 ;
(ii) l'introduction du mélange de matières de moulage ou de ses composants dans un outil de moulage ;
(iii) le durcissement du mélange de matières de moulage dans l'outil de moulage avec au moins une amine tertiaire pour obtenir un corps moulé autoportant ; et
(iv) la séparation consécutive du moule durci de l'outil et le cas échéant le durcissement ultérieur, ce qui permet d'obtenir un corps moulé durci.

12. Procédé selon la revendication 11, dans lequel l'amine tertiaire est choisie parmi un ou plusieurs éléments du groupe : triméthylamine (TMA), diméthyléthylamine (DMEA), diméthyl-n-propylamine (DMPA), diméthyl-iso-propylamine (DMIPA), diéthylméthylamine (DEMA), triéthylamine (TEA), tri-n-propylamine, triisopropylamine, tri-n-butylamine et triisobutylamine et 4-(alkyle en C₁-C₄)pyridine comme tris(3-diméthylamino)propylamine, isoquinoline, arylpyridine comme phénylpyridine, pyridine, acridine, 2-méthoxypyridine, pyridazine, 3-chloro-pyridine, quinoline, N-méthylimidazole, N-éthylimidazole, 4,4'-dipyridine, 4-phénylpropylpyridine, 1-méthylbenzimidazole et 1,4-thiazine.

13. Moule, noyau ou masselotte fabriqué(e) d'après le procédé selon les revendications 11 ou 12.

14. Utilisation du moule ou du noyau fabriqué d'après le procédé selon les revendications 11 ou 12 pour la coulée du métal, en particulier la coulée du fer ou de l'aluminium.
